# EUROPEAN PATENT SPECIFICATION

(11) **EP 3 755 154 B1**
(45) Date of publication and mention of the grant of the patent: **30.03.2022**
(21) Application number: 19705219.4
(22) Date of filing: 18.01.2019
(51) Int. Cl.: A23B 7/02, F26B 17/08

(54) **PLANT AND METHOD FOR DRYING FOODSTUFFS**
ANLAGE UND VERFAHREN ZUM TROCKNEN VON NAHRUNGSMITTELN
INSTALLATION ET PROCÉDÉ DE SÉCHAGE DE PRODUITS ALIMENTAIRES

(30) Priority: 06.02.2018 IT 201800002443
(43) Date of publication of application: 30.12.2020
(73) Proprietor: Tecnofrutta S.r.l., 71045 Orta Nova (IT)
(72) Inventor: FERRAGONIO, Mario, 71045 Orta Nova (IT)
(74) Representative: Celona, Antonio
(86) International application number: PCT/IB2019/050416
(87) International publication number: WO 2019/155307

(56) References cited:
- FR-A1- 2 566 106
- US-A- 4 196 527

## Description

### FIELD OF THE INVENTION

The invention relates to a method for drying fruit and/or vegetables by means of the ascending insufflation of hot air and a drying plant to implement such method.

### BACKGROUND ART

Preserving food, in particular, fruit and vegetables, by means of drying is a long-known method.

By means of the drying process a certain amount of water is eliminated, thereby increasing the shelf life of the food. Furthermore, the drying process, by reducing the weight and volume of the product, allows a reduction in transport and also in storage costs.

The drying of the product usually occurs by means of the evaporation of the water content, caused by the heat administered by means of jets of hot and dry air with the simultaneous elimination of the steam produced. Obviously, also other heat administering methods may be employed.

In the case of drying by means of jets of hot air, the air, after having been suitably treated by means of air conditioning systems, forcibly hits the product to be treated thus drying it.

The drying process may have negative effects on the color of the product and on the consistency thereof; in general, it may lead to an impoverishment of all the organoleptic features thereof.

Such negative effects are mainly due to the temperatures in use, which may be too high but also necessary to obtain an appropriate drying in a short time, while a too low temperature of the air may lead to an insufficient elimination of the humidity.

Other disadvantages of the methods in use may concern an uneven exposure of the product surface to the hot air and also hygiene problems whereby the system used for the drying should be continuously cleaned.

It is therefore necessary a continuous improvement of the systems involved in the drying, so as to improve the quality of foodstuffs, an improvement based, for example, on a more balanced temperature distribution, with moderate peak temperatures, with processes as natural as possible, so as to preserve all the organoleptic properties of the product.

Examples of known drying plants are disclosed in documents FR2566106A1 and US4196527A.

Document FR2566106A1 discloses a drying plant in which, in the drying module, three belts are provided to support the product to be dried, which are superimposed onto one another and associated with respective hot air blowing ducts, said hot air treating the product only by passing through the belts upwards in the vertical direction.

Document US4196527A discloses instead a drying plant in which, in the drying module, a plurality of belts are provided to support the product to be dried, which are superimposed onto one another and in which the blowing of hot air is exclusively in the horizontal direction, i.e., parallel to the belts.

Neither solution allows to preserve all the organoleptic qualities of the product and to uniformly treat the product surface.

### SUMMARY OF THE INVENTION

It is therefore an object of the present invention to provide a plant and a method for drying foodstuffs which preserves all the organoleptic qualities of the product.

It is therefore another object of the present invention to provide a plant and a method for drying foodstuffs which allows to treat the product surface in a more uniform manner with respect to the solutions of the background art.

It is a further object of the present invention to provide a plant for drying foodstuffs, in particular, fruit and vegetables, which is capable of automatically self-cleaning at the end of each working cycle.

The present invention, therefore, proposes to achieve the objects described above by means of a plant for drying foodstuffs, in particular, fruit and vegetables, said plant comprising the features of claim 1 .Another aspect of the invention relates to a drying method, which can be carried out by means of the aforesaid plant, which comprises the features of claim 17.

A further aspect of the invention is a method for drying foodstuffs, in particular, fruit and vegetables, under conditions of minimum stress for the product, a method comprising the use of hot air at low temperatures and low humidity, and in which the product is subjected to various treatment cycles.

Each cycle comprises a water evaporation step, which occurs with an air flow which, transversely introduced from above, preferably tangentially, inside the drying chamber with a substantially circular cross section, first moves by circulatory motion, to then, once the bottom of the drying chamber is reached, cross the belts supporting the product from the bottom upwards in an ascending and convective manner.

In particular, the flow of fresh air inside each drying chamber is introduced from above, in two opposite directions, tangentially to the internal surface of the drying chamber, causing descending side flows which follow the internal side surface of the chamber and, once the bottom part of the chamber is reached, converge in a convective flow of ascending air which crosses a central area of the drying chamber, i.e., the area crossed by the conveyor belts.

In a variant, heating means associated with each conveyor belt are provided in said central area, which heat the air, generating a substantially upwards laminar convective flow.

At least one fan is also provided, which forces this convective flow upwards. A part of the air pushed upwards by the fan, more humid with respect to the entering fresh air, returns backwards, enriching the descending side flows, creating an appropriate mix of dry fresh air and humid recirculating air; another part of the air pushed by the fan is instead expelled from the drying chamber.

At least one heat recovery unit is provided, distinctly crossed by the air expelled from the hotter drying chamber, and by the colder fresh air entering into the plant. Thereby, the entering fresh air is preheated before being introduced into the drying chamber.

The air flow which is generated with the plant of the invention, given the substantially circular shape of the body of the drying plant, allows the conservation of the air motion in an almost laminar and non-perturbed state, leading the hot air to hit the tapes and the relative product without altering the pressure and therefore the temperature of the air fluid, said effect being optimized by the substantially circular geometry of the drying chambers.

The drying module is equipped with temperature and humidity probes at the inlet and at the outlet of the air, with a washing water collection tank.

The structure of the drying module is made of stainless steel and the conveyor belts are made of heat-resistant and easily washable modular thermoplastic. Further features of the invention may be deduced from the dependent claims.

### BRIEF DESCRIPTION OF THE FIGURES

Further features and advantages of the invention will become more apparent in the light of the detailed description of preferred, but not exclusive, embodiments of a drying plant, shown by way of explanation but not by way of limitation, with the aid of the accompanying drawings, in which:
Figure 1 shows a sectional side view of a first embodiment of the drying plant in accordance with the invention, in which the air flow inside each drying chamber is shown;
Figure 2 shows the same side view of Figure 1, in which the path taken by the product to be dried is shown;
Figure 3a shows, in a cross section, the drying plant of the preceding Figures where an example of the local temperature and humidity values of the air flow to which the product is subjected on the path thereof has been highlighted;
Figure 3b shows, in a cross section, the drying plant of the preceding Figures in a particular operating position;
Figure 4 shows a detail of the belts for conveying the products;
Figure 5a shows a sectional side view of a second embodiment of the drying plant in accordance with the invention;
Figure 5b shows the same side view of Figure 5a, in which the air flow inside the plant is shown;
Figure 5c shows a top view of the top part of the plant of Figure 5b;
Figure 5d shows a cross section of the plant of Figure 5b;
Figure 6 shows a diagrammatic perspective view of a first part of said second embodiment, in which the air flow entering and the air flow exiting a drying chamber are shown;
Figure 7a shows a diagrammatic perspective view of a drying chamber;
Figure 7b shows a side view of the drying chamber of Figure 7a;
Figures 8a and 8b show a longitudinal section and a cross section of said second embodiment in a particular operating position;
Figure 9 shows further details of the conveyor belts;
Figure 10 shows a perspective view of some drying modules of the plant of the invention.

The same reference numerals in the Figures identify the same elements or components.

### DETAILED DESCRIPTION OF SOME EMBODIMENTS OF THE INVENTION

Some embodiments of a drying plant in accordance with the invention are shown in the accompanying Figures.

The drying plant 100 substantially comprises: at least one continuous air treatment module 1, also called the aerothermal module, a continuous drying module 2, and preferably an automatic washing module 3.

In all embodiments of the invention, the plant 100 for drying foodstuffs 6, in particular fruit and vegetables, defines a longitudinal axis X and comprises:
- a continuous drying module 2 comprising one or more drying chambers 2' having a substantially cylindrical shape, coaxial to the axis X and aligned with one another along the axis X, and a series of conveyor belts 10 adapted to continuously move inside said one or more drying chambers 2' and arranged on planes substantially parallel and superimposed, said conveyor belts (10) being adapted to move in an alternating motion direction and at a speed different from one another,
- at least one aerothermal module 1 for the treatment of air taken from the external environment, adapted to introduce preheated air, by means of at least one heat recovery unit or exchanger 20, into the continuous drying module 2, in particular in each of the drying chambers 2'.

Advantageously, the continuous drying module 2, and, in particular, each drying chamber 2', comprises air flow generation means to generate, transversely from above, descending side air flows, in directions opposite to each other, which follow the internal side half-surfaces of the drying chamber 2' and which, once the bottom of the drying chamber is reached, converge into an ascending air flow which passes through a central area 41 of the drying chamber 2' crossed by said conveyor belts 10.

In a preferred variant, said air flow generation means comprise in each drying chamber 2':
- at least one top duct 40, communicating with said at least one aerothermal module 1 and of such a shape as to generate two descending side air flows, opposite to each other, which follow the internal side surface of the drying chamber 2',
- heating means 50, 21 to heat the air inside the drying chamber 2';
- a tunnel 42 defining said central area 41, placed below said at least one top duct 40, and open, in addition to the two ends, considering the extension thereof along the axis X, also below, towards the bottom of the drying chamber where the two descending side flows converge;
- at least one fan 22, arranged between the tunnel 42 and the at least one top duct 40, adapted to suck air from the tunnel 42, pushing it upwards;
whereby said at least one fan 22 is adapted to generate said ascending air flow in the central area 41 delimited by the tunnel 42.

Preferably, each drying chamber 2' is provided, above, with:
- at least one first opening 43 for an escape of a first part of air of said ascending air flow pushed by the at least one fan 22;
- and at least one second opening 44 for the introduction of the preheated air from the aerothermal module 1 into said at least one top duct 40.

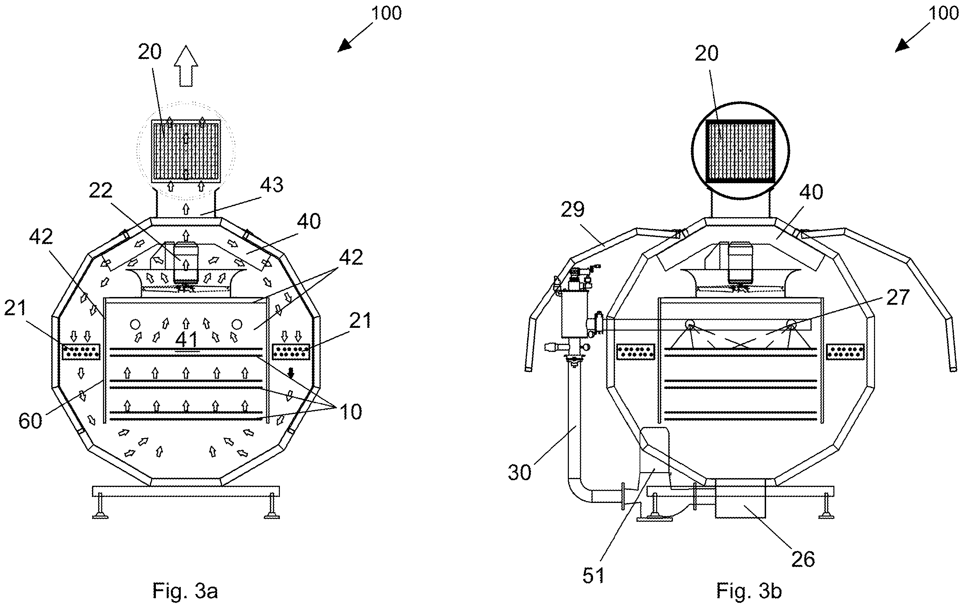

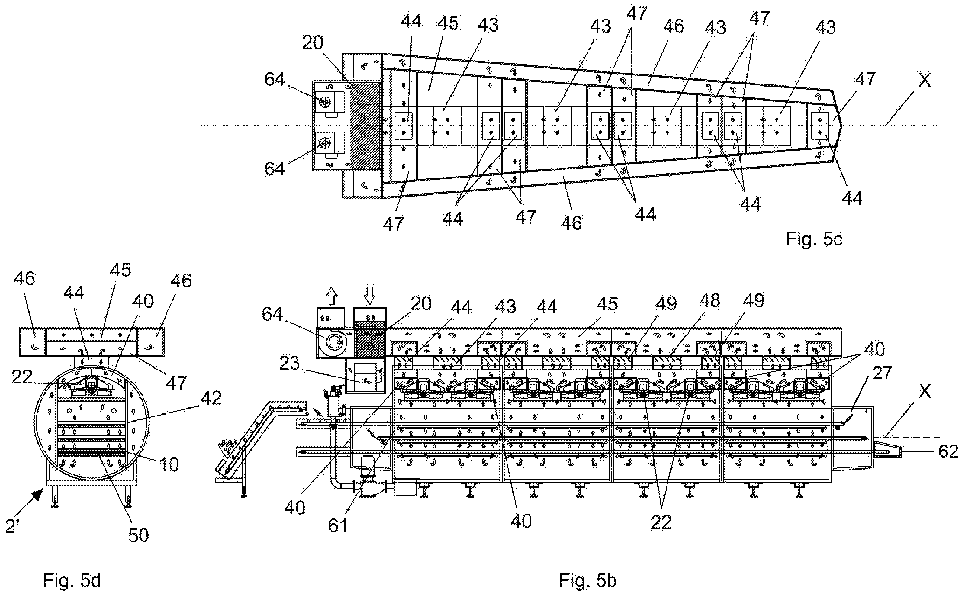

Said at least one top duct 40, as shown in Figures 3a and 5d, has a substantially arcuate shape, near the top of the drying chamber, and is directly communicating with the corresponding second opening 44. Such duct 40 is arranged symmetrically with respect to a vertical plane, preferably a center plane of the drying chamber.

Preferably, the at least one aerothermal module 1 comprises:
- at least one heat recovery unit 20 adapted to be crossed by said first part of air of the ascending air flow, to preheat, by means of heat exchange, air at room temperature entering said heat recovery unit 20, obtaining said preheated air;
- and at least one delivery fan 23 connected to said at least one heat recovery unit 20 to introduce said preheated air into the at least one second opening 44 of the drying chamber.

This at least one fan 23 also sucks the first part of air of the ascending air flow pushed by the at least one fan 22 and which escapes from the at least one first opening 43.

In all embodiments, both the first openings 43 and the second openings 44 can be provided with respective air flow regulation means 48, 49, for example, in the form of directional fins.

The drying module 2 is equipped with temperature and humidity probes, preferably, but not exclusively, at the inlet and outlet of the air.

Optionally, the plant is further provided with a washing module 3 equipped with washing water temperature probes. A piping system 30, 27 is provided, adapted to convey washing water on the conveyor belts 10, automatically providing the cleaning of the drying module 2.

As for the movement of the conveyor belts 10, a motor can be provided, associated with each individual conveyor belt 10, said motors being provided with independent control and setting of the speed of the conveyor belts 10, so as to ensure that the speed of the conveyor belts increases starting from the bottom belt, located on the bottom plane, which has the lowest speed, to get to the top belt, located on the top plane, which is operated at the highest speed.

The at least one aerothermal module 1 can comprise a condensate recovery battery in the case of using steam as the heating method of said heating means 50, 21, preferably comprising adjustable temperature coils. Each coil may be arranged inside the tunnel 42 below each conveyor belt 10 in each drying chamber 2', or said adjustable temperature coils are arranged externally of said tunnel 42 in each drying chamber 2', at both side surfaces 60 of the tunnel 42.

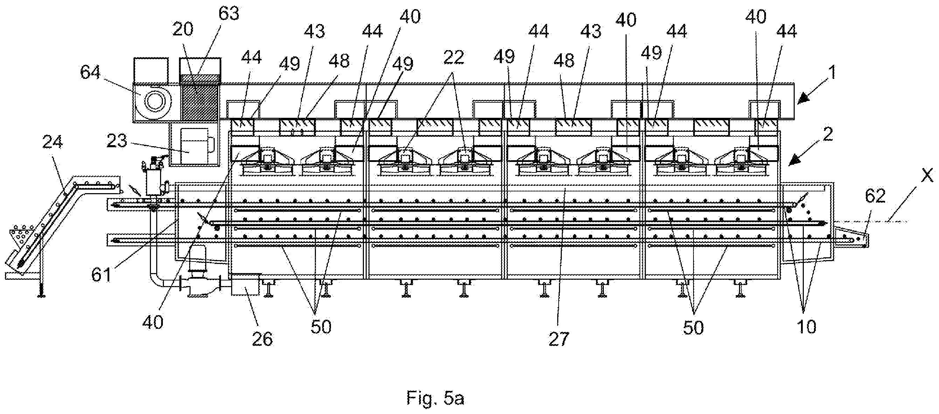

In the case of coils arranged inside the tunnel 42 below each conveyor belt 10, as many coils are provided in each drying chamber 2' as the number of conveyor belts. In the example of Figure 5a a coil is provided below each belt in each chamber, whereby three distinct coils are present in each chamber, the latter being provided with three belts 10.

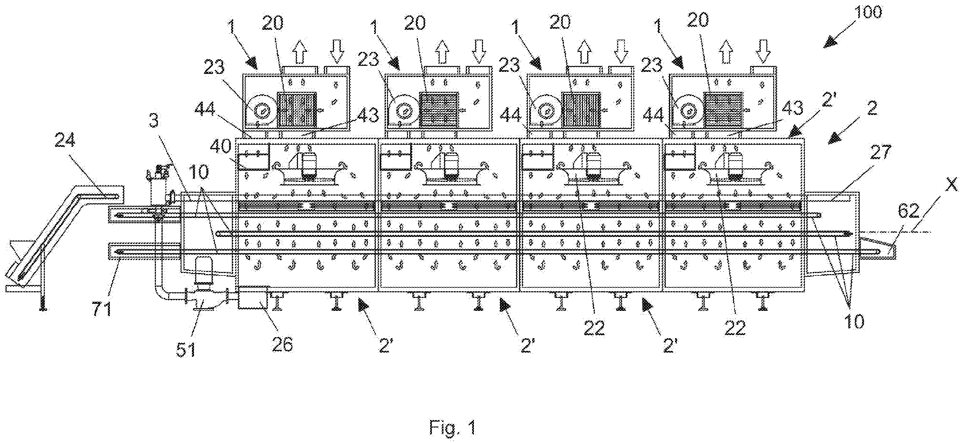

With reference to a first embodiment, shown in Figures 1 to 4, the plant 100 of the invention comprises a plurality of aerothermal modules 1, each aerothermal module 1 being placed above a respective drying chamber 2'. In the example of the Figures, four aerothermal modules 1 are present for corresponding four drying chambers 2'. However, this number may alternatively be greater or lower than four.

In a first variant of the first embodiment, shown in Figure 3a, the heating means 21 are arranged outside the tunnel 42, at both the side surfaces 60 of the tunnel 42, to heat the descending side air flows.

In a second variant of the first embodiment, not shown, the heating means are arranged inside the tunnel 42 below each conveyor belt 10, whereby said heating means, in cooperation with the at least one fan 22, are adapted to generate said ascending air flow in the central area 41.

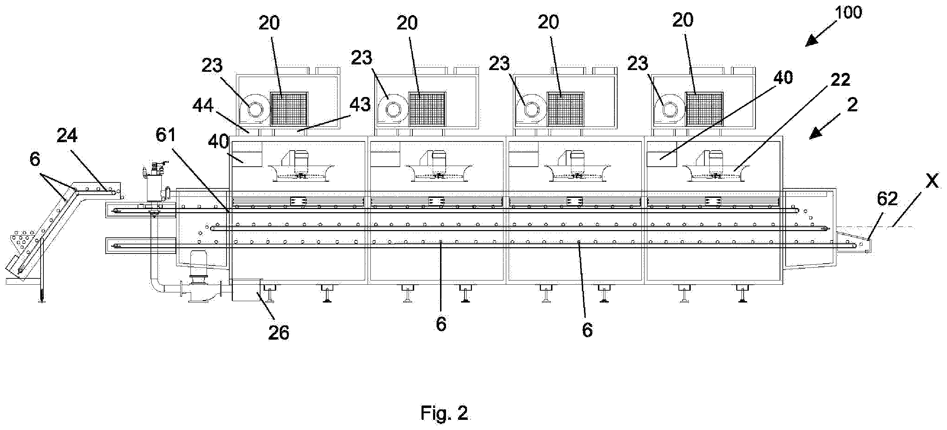

Each aerothermal module 1 preferably comprises (Figures 1 and 2):
- at least one heat recovery unit 20 communicating with the respective first opening 43 so as to be crossed by said first part of air of the ascending air flow, to preheat, by means of heat exchange, air at room temperature entering said heat recovery unit 20, obtaining said preheated air;
- at least one delivery fan 23 connected to said at least one heat recovery unit 20 to introduce said preheated air into the respective second opening 44.

As it may be seen in Figure 3a, each drying chamber 2' has a substantially cylindrical shape, for example, having a dodecagon-shaped cross section. Alternatively, the drying chamber may have a cylindrical shape, with a circular cross section.

The aerothermal or air treatment module 1, located at the top part of the drying plant 100 comprises, for example, a heat recovery unit 20, preferably finned and made of aluminum, and a delivery fan, or heat recovery fan 23, which introduces the preheated refreshment air from the heat recovery unit 20 into the drying chamber.

By way of example, the heating means 21 comprise two heat exchange batteries or adjustable temperature heating coils, placed laterally with respect to the tunnel 42 of the drying chamber (Figure 3a). Said heat exchange batteries 21 are present at each aerothermal module 1.

A single fan 22 can be provided (Figure 1) which vertically sucks hot and humid air sent in part into each aerothermal module 1.

The delivery fan 23 also has the function of not exhausting the two heat exchange batteries 21, and of reducing energy consumption with clear advantages.

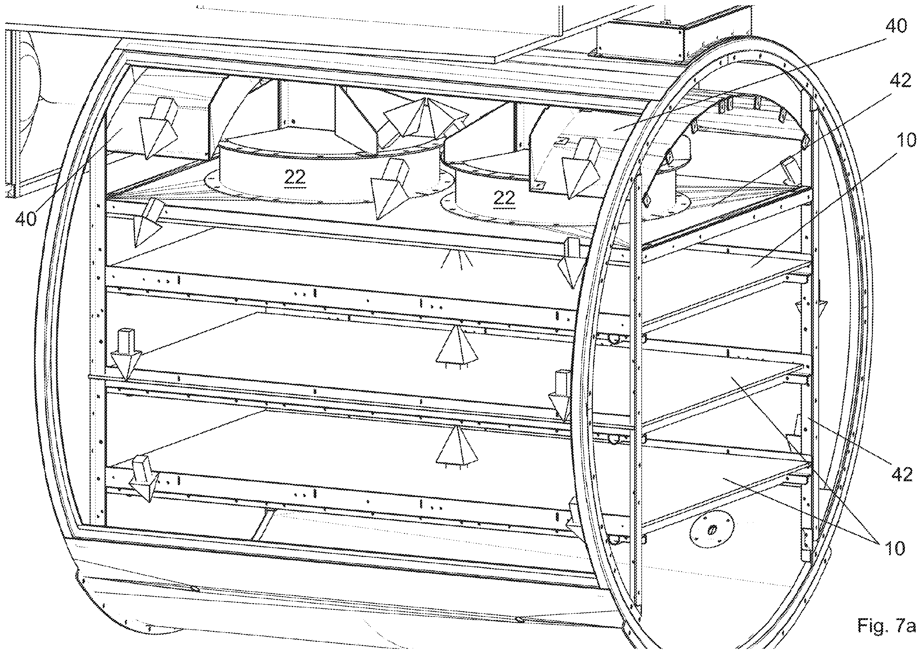

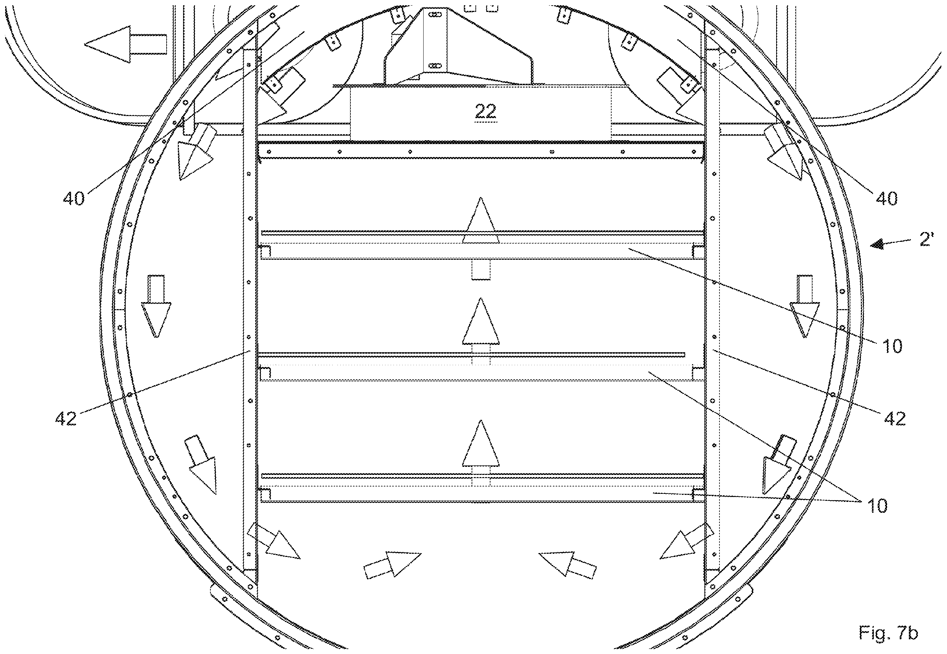

With reference to a second embodiment, shown in Figures 5a to 10, the plant 100 of the invention comprises a single aerothermal module 1, of a longitudinal shape and placed above the one or more drying chambers 2'. In the example of the Figures, the aerothermal module 1 is arranged along the axis X above four drying chambers 2'. However, the number of drying chambers may alternatively be greater or lower than four.

In a first variant of the second embodiment, shown in Figures 5a-5d, the heating means 50 are arranged inside the tunnel 42 below each conveyor belt 10, whereby said heating means 50, in cooperation with said at least one fan 22, are adapted to generate said ascending air flow in the central area 41.

In a second variant of the second embodiment, not shown, the heating means are arranged outside the tunnel 42, at both the side surfaces 60 of the tunnel, to heat the descending side air flows.

The only aerothermal module 1 of the second embodiment comprises
- a central duct 45, arranged along the longitudinal axis X and communicating with each first opening 43 so as to convey said first part of air of the ascending air flow towards the at least one heat recovery unit 20;
- side ducts 46, arranged along said longitudinal axis, communicating with said at least one heat recovery unit 20, adapted to convey said preheated air towards each second opening 44.

The at least one delivery fan 23 is configured to introduce the preheated air from the heat recovery unit 20 into the side ducts 46.

Preferably, two side ducts 46 are provided, symmetrically arranged with respect to the central duct 45, and at least one transverse duct 47 for each drying chamber 2' connecting the two side ducts 46 to the at least one second opening 44.

In the variant of Figure 5a-5d, for each drying chamber 2' there are provided: two top ducts 40, arranged at the ends of the drying chamber 2' considering the extension thereof along the longitudinal axis X; two second openings 44, each second opening 44 placed at a respective top duct 40; and two transverse ducts 47, each transverse duct 47 connecting said side ducts 46 to a respective second opening 44.

In particular, it is preferable that the two side ducts 46 define axes converging towards the longitudinal axis X (Figure 5c), more spaced apart from one another at a first drying chamber 2' wherein an opening 61 for the inlet of the product into the drying module 2 is preferably provided, and less spaced apart from one another at a last drying chamber 2', wherein an opening for the outlet 62 of the product from said product drying module 2 is preferably provided.

The at least one heat recovery unit 20, preferably a single heat recovery unit (Figure 5c), is arranged at an end of the single aerothermal module 1, preferably at the first drying chamber 2' in which the inlet opening 61 of the product is provided.

As it may be seen in Figure 5d, each drying chamber 2' has a cylindrical shape, with a circular cross section. Alternatively, the drying chamber may have a just substantially cylindrical shape, for example, having a dodecagon-shaped cross section.

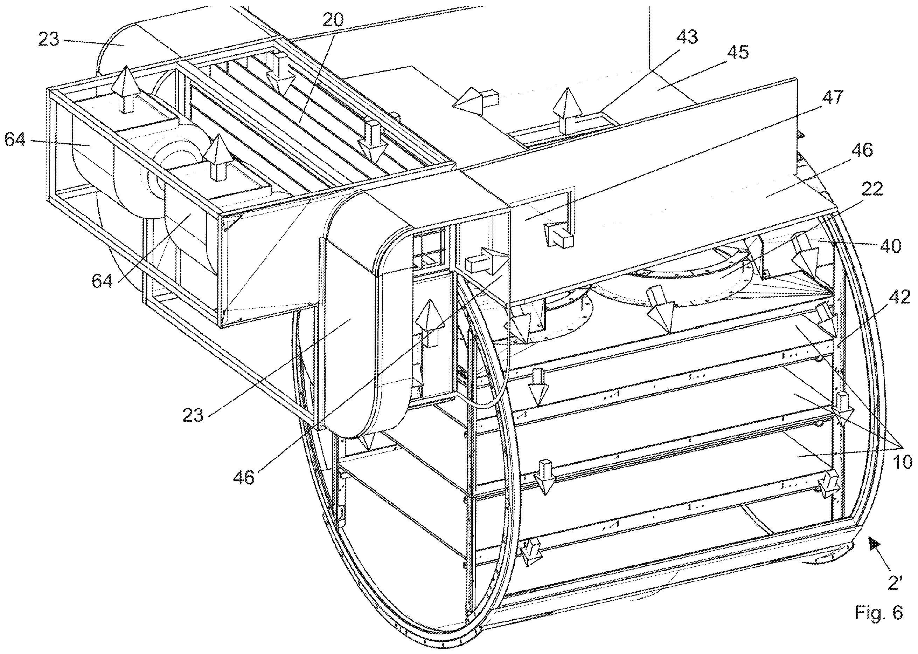

In Figures 6, 7a and 10, for a greater understanding of the features of the plant, the side walls of the tunnels 42 and/or the side half-surfaces 70 of each drying chamber 2' have been deliberately omitted.

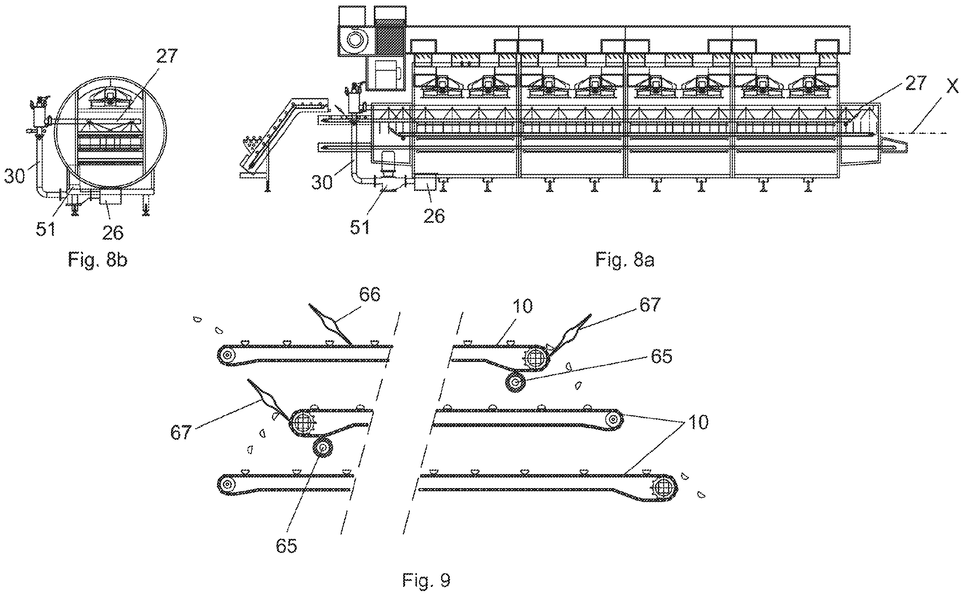

Optionally, in all embodiments described above, one or more of the following features may be provided:
- at least one filter 63 (Figure 5a) for the room air entering into the heat recovery unit 20;
- at least one fan 64 (for example in the number of two in Figure 5a) for the expulsion of the humid air exiting the heat recovery unit 20;
- at least one rotating brush 65 (Figure 9), placed below each conveyor belt 10, to keep the belt clean;
- at least one device 66 for the alignment of the entering product (Figure 9), adapted to cooperate with the top face of the top belt;
- at least one device 67 for releasing the product (Figure 9), placed at the end of each belt (excluding the bottom belt), said end being the one corresponding to the fall area of the product from one belt to the one below.

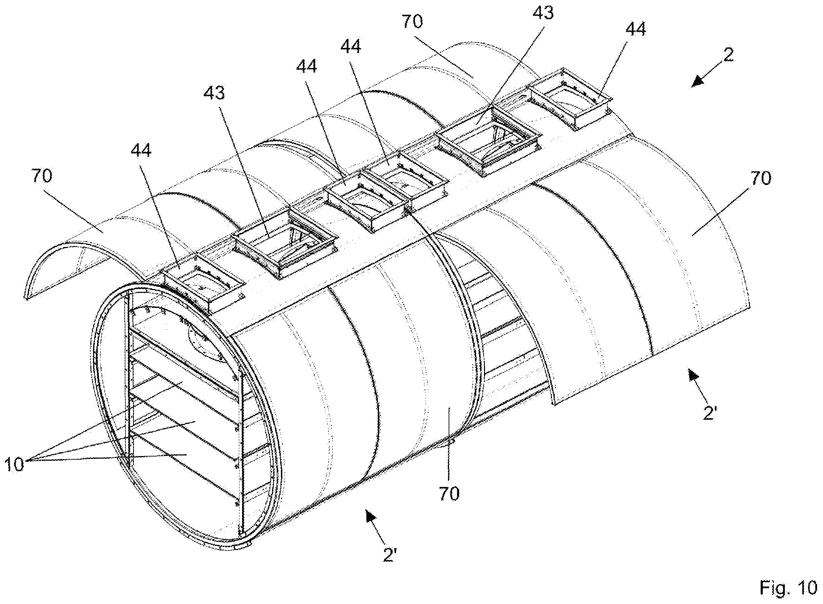

Preferably, in all embodiments described above, the two side half-surfaces 70 of each drying chamber 2' (Figure 10), of a substantially cylindrical shape, are defined by openable doors, hinged above, to facilitate the inspection of one or more drying chambers 2' in case of need or maintenance.

In a process variant, the product can enter the drying module 2 directly on the lower belt through the bottom inlet 71 (Figure 1), bypassing the lifting belt 24.

The plant of the invention presents the following aspects in the embodiments thereof.

Such aerothermal module 1 has the function of providing hot and dry air with a convective circulatory flow, ascending vertically and in forced movement through the product, in a uniform manner.

The hot air which arrives at the conveyor belts 10 (better described below) in the bottom area of the drying module 2 passes through the product 6 in an ascending manner and at a low speed towards the aerothermal module 1 to be again subjected to the cycle and sent back towards the conveyor belts below.

The drying module 2 consists of a plurality of continuous conveyor belts 10 placed on various levels superimposed and arranged inside the drying tunnel 42 of the drying module 2, preferably a tunnel 42 is provided for each drying chamber 2' of said module 2, each tunnel being aligned with the next one along the longitudinal axis X.

The conveyor belts 10 can be equipped with suitable sliding guides made of stainless steel and heat-resistant modular thermoplastic mats, suitable for the food industry and easily washable.

The movement direction of the various conveyor belts 10 is alternating, i.e., the movement direction of a conveyor belt 10 is opposite to that of the conveyor belt 10 which is at the level above or below.

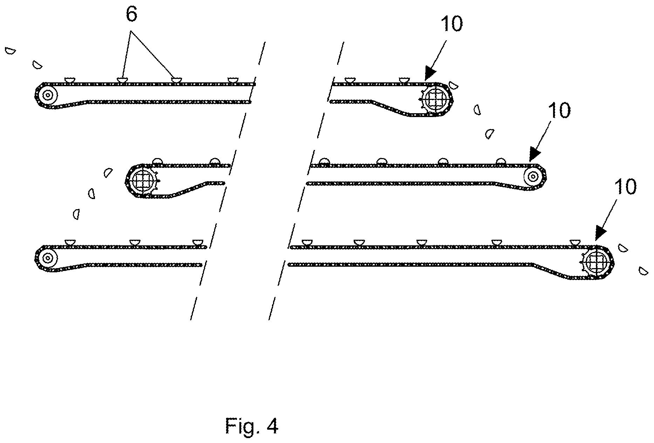

As visible, for example, in Figure 4 or Figure 5a, the product 6, brought at the top level by a lifting belt 24 (visible in Figure 1 or 5a) is unloaded on the first conveyor belt 10, which meets the hot air flow coming from below.

At the end of this first belt, the product 6 falls, overturning on the second belt below, whose movement direction is opposite to that of the first belt, meeting hotter and less humid air coming from below.

At the end of this second belt, the product 6 falls, overturning again, on the third belt below, which moves in the direction opposite to that of the second belt above, where it is again hit by air, always coming from below, further hotter and less humid.

Thereby, the product, subjected to continuous changes of direction and exposed to an increasingly hot and dry air flow, arrives at the bottom conveyor belt from where it is unloaded out of the drying plant 2.

At the end of the working cycle the whole system automatically self-cleans, by virtue of a pipe conveying water in a continuous motion on the various planes of the machine by falling.

The washing module 3 comprises, or consists of, a water collection tank 26 (Figure 1) positioned at an end and bottom part of the drying plant 1, a lifting pump or washing pump 51, a pipe 27 (Figure 3) with suitable holes for distributing the washing water inside the drying module, enriched with a possible sanitizing detergent, and suitable pipes 30 connecting the lifting pump 51 to the pipe 27. Preferably the washing water is heated while falling from the same heating means 21 or 50, for example coils, present inside the drying chambers 2'. Filters for the washing water are also provided before the inlet thereof into the drying module. The drying method in accordance with the invention is based on the removal of the humidity from foodstuffs by means of a transverse and ascending circulatory motion of dry hot air; everything occurs at relatively low air flow temperatures and pressure: this is a wholly natural process, such as to preserve the organoleptic features and properties of the food and to ensure a uniform drying.

The method undertaken involves a first descent of the product on the highest level. Each belt has a different speed, depending on the plane it is on, starting from the top plane which is also the slowest one, to get to the last tape at the bottom which is the fastest.

The product moves from the area which is hit by less hot and more humid air, so as not to be aggressive on the product, producing a consequent, sudden superficial cooking.

Subsequently, the product moves towards areas increasingly closer to the hotter and drier air flow.

The reason for this method is due to the fact that the product heats up to lose water, with a ventilation with a lower air flow rate, to then dry gradually and completely, at the lower levels, where the air flow is stronger, hotter and dryer; furthermore, the hot air flow, being transverse, circulatory and ascending, forcibly passes through the grids of the belts in a uniform manner, hitting the product in the entirety thereof, giving a more uniform drying degree with times reduced compared to treatments with longitudinal and axial aerothermal flows.

The cyclic process is divided into a first part, which involves the top planes with lower temperatures, and ends with a second part, at the bottom levels, with higher temperatures, lower humidity and greater belt speeds.

With reference numeral 28 (Figure 3) the area designated for the evaporation is indicated.

The plant 100 is equipped with a plurality of probes or sensors to control the temperature, humidity and flow rate of the air and to control the temperature of the washing water.

Preferably, in all embodiments of the invention, for each drying chamber 2' there may be provided:
- at least one air temperature probe, placed below and near each belt 10;
- at least one air humidity probe, placed below and near each belt 10.

The drying process, which may be carried out by means of the embodiments of the plant described above, is described below.

Such process for drying foodstuffs 6 comprises, at regime operation of the plant, the advancement of the foodstuffs 6 on the series of conveyor belts 10 which continuously move inside one or more drying chambers 2' in an alternating motion direction and at a speed different from one another.

During the advancement of the foodstuffs 6, dried by the hot air already present inside the drying chambers 2', the introduction of refreshment air is provided, preheated at a first temperature, for example comprised in the range 35-45°C, by means of the at least one aerothermal module 1, in the drying chambers 2', said first temperature being lower than the air temperatures already present in the drying chambers 2', included for example in the range 50-85°C or 65-85°C. Advantageously, the preheated refreshment air is introduced from above in two directions opposite to each other, by means of the arcuate shape of at least one top duct 40, substantially tangentially to the internal side surface of each drying chamber 2', generating two descending side air flows which follow said internal side surface and which, once the bottom of the drying chamber is reached, converge in an ascending air flow which passes through the central area 41 of the drying chamber crossed by the conveyor belts 10.

The air flow ascending in the central area 41, delimited by the tunnel 42, is generated by sucking air from the tunnel 42 from the bottom upwards by means of at least the fan 22, arranged between the tunnel 42 and said at least one top duct 40.

In the case of the second embodiment, in particular, said ascending air flow is also generated by heating said air by means of the heating means 50 associated with each conveyor belt 10.

Advantageously, it is preferable that a first part of hot and humid air of said ascending air flow escapes from at least the first top opening 43 of the drying chamber 2', while a second part of air of said ascending air flow is diverted laterally, for example by the presence of the top duct 40 of a curvilinear shape, feeding the descending side flows.

Therefore, at regime, these descending side air flows consist of the set of said second part of air of the ascending air flow, which is diverted laterally, and by the refreshment air preheated entering from the top duct or ducts 40.

Instead, the first part of air of the ascending air flow, escaped from the first top opening 43 passes through at least one heat recovery unit 20 to preheat air at room temperature (for example, about 20°C) entering said heat recovery unit, obtaining said preheated air (for example, about 40°C), which is introduced into the drying chamber.

Preferably, the speed of the conveyor belts increases starting from the bottom belt, located on the bottom plane, which has the lowest speed, to get to the top belt, located on the top plane, which is operated at the highest speed.

Along each plane of the conveyor belts 10 a temperature gradient of the air flow is there, with a maximum temperature at the bottom part of the drying module, and a minimum at the top part of the conveyor belt 10.

Inside the drying module 2 there is a vertical temperature gradient, in which the top planes have in average lower temperatures and higher humidity with respect to the bottom planes, so that the bottom plane has the highest temperatures and the driest air.

Exclusively by way of example, the temperature of the air flow is comprised between a maximum of 80°C and a minimum of 45 or 50°C.

The products 6, once loaded onto the top belt located on the last plane, continue the path thereof overturning when passing from a plane to the lower one by falling, finally exiting the drying module 2 through the first plane, preferably at a point located in a position opposite to the lifting belt 24, i.e., opposite to the product inlet section.

## Claims

1. A plant (100) for drying foodstuffs (6), in particular fruit and vegetables, said plant (100) defining a longitudinal axis (X) and comprising:
- a continuous drying module (2) comprising one or more drying chambers (2') having a substantially cylindrical shape and a series of conveyor belts (10) adapted to continuously move inside said one or more drying chambers and arranged on planes substantially parallel and superimposed, said conveyor belts (10) being adapted to move in an alternating motion direction and at a speed different from one another,
- at least one aerothermal module (1) for continuous air treatment, adapted to introduce preheated air, by means of at least one heat recovery unit (20), into said continuous drying module (2),
wherein said continuous drying module (2) comprises air flow generation means to generate from above descending side air flows, in two directions opposite to each other, which follow the internal side surface of each drying chamber (2') and which, once a bottom of the drying chamber is reached, converge into an ascending air flow which passes through a central area (41) of the drying chamber crossed by said conveyor belts (10).

2. A plant (100) according to claim 1, wherein said air flow generation means comprise in each drying chamber (2'):
- at least one top duct (40), communicating with said at least one aerothermal module (1) and of such a shape as to generate two descending side air flows which follow the internal side surface of the drying chamber (2'),
- heating means (50, 21) to heat the air inside the drying chamber (2');
- a tunnel (42) defining said central area (41), placed below said at least one top duct (40), and open below towards the bottom of the drying chamber where said descending side flows converge;
- at least one fan (22), arranged between said tunnel (42) and said at least one top duct (40), adapted to suck air from the tunnel (42);
whereby said at least one fan (22) is adapted to generate said ascending air flow in said central area (41).

3. A plant according to claim 2, wherein each drying chamber (2') is provided above with
- at least one first opening (43) for an escape of a first part of air of said ascending air flow pushed by said at least one fan (22);
- and at least one second opening (44) for the introduction of the preheated air into said at least one top duct (40);
and wherein said at least one aerothermal module (1) comprises
- said at least one heat recovery unit (20) adapted to be crossed by said first part of air, to preheat, by means of heat exchange, air at room temperature entering said heat recovery unit, obtaining said preheated air;
- and at least one delivery fan (23) connected to said at least one heat recovery unit (20) to introduce said preheated air into the at least one second opening (44).

4. A plant (100) according to claim 3, wherein a single aerothermal module (1) is provided, placed above the one or more drying chambers (2') aligned with one another along said longitudinal axis (X);
and preferably wherein the heating means (21) are arranged outside the tunnel (42), at both side surfaces (60) of said tunnel, to heat said descending side flows, or wherein the heating means (50) are arranged inside the tunnel (42) below each conveyor belt (10) whereby said heating means (50), in cooperation with said at least one fan (22), are adapted to generate said ascending air flow in said central area (41).

5. A plant (100) according to claim 4, wherein said aerothermal module (1) comprises
- a central duct (45), arranged along the longitudinal axis (X) and communicating with each first opening (43) so as to convey said first part of air towards the at least one heat recovery unit (20);
- side ducts (46), arranged along said longitudinal axis, communicating with said at least one heat recovery unit (20), adapted to convey said preheated air towards each second opening (44),
and wherein said at least one delivery fan (23) is adapted to introduce said preheated air into said side ducts (46).

6. A plant (100) according to claim 5, wherein there are provided two side ducts (46), arranged symmetrically with respect to said central duct (45), and at least one transverse duct (47) for each drying chamber (2') connecting said side ducts (46) to the at least one second opening (44).

7. A plant (100) according to claim 6, wherein for each drying chamber (2') there are provided two top ducts (40), arranged at the ends of said drying chamber (2') along the longitudinal axis (X); two second openings (44), each second opening (44) placed at a respective top duct (40); and two transverse ducts (47), each transverse duct (47) connecting said side ducts (46) to a respective second opening (44).

8. A plant (100) according to claim 6 or 7, wherein said side ducts (46) define axes converging towards said longitudinal axis (X), more spaced apart from one another at a first drying chamber (2') wherein an opening for the inlet of the product into the drying module (2) is preferably provided, and less spaced apart from one another at a last drying chamber (2'), wherein an opening for the outlet of the product from said product drying module (2) is preferably provided.

9. A plant according to any one of claims 3 to 8, wherein in said first openings (43) and in said second openings (44) air flow regulation means (48, 49) are provided; optionally wherein said at least one heat recovery unit (20), preferably a single heat recovery unit, is arranged at an end of said aerothermal module, preferably at the first drying chamber (2') wherein an opening for the inlet of the product into the drying module (2) is provided.

10. A plant (100) according to claim 3, wherein a plurality of aerothermal modules (1) is provided, each aerothermal module (1) being placed above a respective drying chamber (2'), the drying chambers being aligned with one another along said longitudinal axis (X);
preferably wherein the heating means (21) are arranged outside the tunnel (42), at both side surfaces (60) of said tunnel, to heat said descending side flows, or wherein the heating means (50) are arranged inside the tunnel (42) below each conveyor belt (10) whereby said heating means (50), in cooperation with said at least one fan (22), are adapted to generate said ascending air flow in said central area (41);
and preferably wherein each aerothermal module (1) comprises
- at least one heat recovery unit (20) communicating with the respective first opening (43) so as to be crossed by said first part of air, to preheat, by means of heat exchange, air at room temperature entering said heat recovery unit, obtaining said preheated air;
- at least one delivery fan (23) connected to said at least one heat recovery unit (20) to introduce said preheated air into the respective second opening (44).

11. A plant (100) according to any one of the preceding claims, wherein the drying module (2) is equipped with temperature and humidity probes at the air inlet and at the air outlet, the plant (100) being, preferably, further provided with a washing module (3) equipped with washing water temperature probes;
preferably wherein motors are provided associated with each individual conveyor belt (10), said motors being provided with independent control and setting of the speed of the conveyor belts (10);
preferably wherein a piping system is provided, adapted to convey washing water on the conveyor belts (10) automatically providing the cleaning of the drying module (2).

12. A plant (100) according to any one of claims 2 to 11, wherein the aerothermal module (1) comprises a condensate recovery battery in the case of using steam as the heating method of said heating means (50, 21), preferably comprising adjustable temperature coils, preferably wherein each coil is arranged inside the tunnel (42) below each conveyor belt (10) in each drying chamber (2'), or wherein said adjustable temperature coils are arranged externally to said tunnel (42) in each drying chamber (2'), at both side surfaces (60) of the tunnel (42).

13. A foodstuffs drying process (6), which can be carried out by means of a plant (100) according to any one of the preceding claims, the process comprising, at regime operation of the plant, the advancement of the foodstuffs (6) on the series of conveyor belts (10) which continuously move inside said one or more drying chambers (2') in an alternating motion direction and at a speed different from one another;
wherein there is provided the introduction of preheated air into said one or more drying chambers (2') by means of the at least one aerothermal module (1) at a first temperature, said first temperature being lower than the temperatures of the air present in said one or more drying chambers (2');
wherein said preheated air is introduced from above in two directions opposite to each other, preferably by means of at least one top duct (40) provided in each drying chamber, and substantially tangentially to the internal side surface of the drying chamber (2'), generating descending side air flows which follow said internal side surface and which, once the bottom of the drying chamber is reached, converge into an ascending air flow which passes through a central area (41) of the drying chamber crossed by said conveyor belts (10).

14. A process according to claim 13, wherein said ascending air flow in the central area (41), delimited by a tunnel (42), is generated by sucking air from the tunnel (42) from the bottom upwards by means of at least one fan (22), arranged between said tunnel (42) and said at least one top duct (40), and is preferably also generated by heating said air by means of heating means (50) associated with each conveyor belt (10).

15. A process according to claim 13 or 14, wherein a first part of air of said ascending air flow escapes from at least one first top opening (43) of the drying chamber (2'), while a second part of air of said ascending air flow is diverted laterally, feeding the descending side flows;
preferably wherein said first part of air escaped from the first top opening (43) passes through at least one heat recovery unit (20) to preheat air at room temperature entering said heat recovery unit, obtaining said preheated air, which is introduced into the drying chamber.

## Patentansprüche

1. Anlage (100) zum Trocknen von Lebensmitteln (6), insbesondere von Obst und Gemüse, wobei die Anlage (100) eine Längsachse (X) definiert und umfasst:
- ein kontinuierliches Trocknungsmodul (2), das eine oder mehrere Trocknungskammern (2') mit einer im Wesentlichen zylindrischen Form und eine Reihe von Förderbändern (10) umfasst, die so beschaffen sind, dass sie sich kontinuierlich in der einen oder den mehreren Trocknungskammern bewegen und auf im Wesentlichen parallelen und übereinander liegenden Ebenen angeordnet sind, wobei die Förderbänder (10) so beschaffen sind, dass sie sich in einer alternierenden Bewegungsrichtung und mit einer voneinander verschiedenen Geschwindigkeit bewegen,
- mindestens ein aerothermisches Modul (1) zur kontinuierlichen Luftbehandlung, das geeignet ist, vorgewärmte Luft mittels mindestens einer Wärmerückgewinnungseinheit (20) in das Modul (2) zur kontinuierlichen Trocknung einzuleiten,
wobei das kontinuierliche Trocknungsmodul (2) Mittel zur Erzeugung eines Luftstroms umfasst, um von oben absteigende Seitenluftströme in zwei einander entgegengesetzten Richtungen zu erzeugen, die der inneren Seitenfläche jeder Trocknungskammer (2') folgen und die, sobald ein Boden der Trocknungskammer erreicht ist, in einen aufsteigenden Luftstrom konvergieren, der durch einen zentralen Bereich (41) der Trocknungskammer verläuft, der von den Förderbändern (10) durchquert wird.

2. Anlage (100) nach Anspruch 1, wobei die Mittel zur Erzeugung eines Luftstroms in jeder Trocknungskammer (2') vorhanden sind:
- mindestens einen oberen Kanal (40), der mit dem mindestens einen aerothermischen Modul (1) in Verbindung steht und so geformt ist, dass er zwei absteigende Seitenluftströme erzeugt, die der inneren Seitenfläche der Trocknungskammer (2') folgen,
- Heizmittel (50, 21) zur Erwärmung der Luft in der Trocknungskammer (2');
- einen Tunnel (42), der den zentralen Bereich (41) definiert, unterhalb des mindestens einen oberen Kanals (40) angeordnet ist und unten zum Boden der Trocknungskammer hin offen ist, wo die absteigenden Seitenströme zusammenlaufen;
- mindestens ein Gebläse (22), das zwischen dem Tunnel (42) und dem mindestens einen oberen Kanal (40) angeordnet ist und Luft aus dem Tunnel (42) ansaugen kann;
wobei das mindestens eine Gebläse (22) geeignet ist, den aufsteigenden Luftstrom in dem zentralen Bereich (41) zu erzeugen.

3. Anlage nach Anspruch 2, wobei jede Trocknungskammer (2') oben mit folgenden Elementen versehen ist
- mindestens einer ersten Öffnung (43) für den Austritt eines ersten Teils der Luft des aufsteigenden Luftstroms, der von dem mindestens einen Gebläse (22) gefördert wird;
- und mindestens einer zweiten Öffnung (44) für die Einführung der vorgewärmten Luft in den mindestens einen oberen Kanal (40);
und wobei das mindestens ein aerothermisches Modul (1) Folgendes umfasst
- die mindestens eine Wärmerückgewinnungseinheit (20), die von dem ersten Teil der Luft durchströmt werden kann, um durch Wärmeaustausch Luft auf Raumtemperatur vorzuwärmen, die in die Wärmerückgewinnungseinheit eintritt, wodurch die vorgewärmte Luft erhalten wird;
- und mindestens ein Fördergebläse (23), das mit der mindestens einen Wärmerückgewinnungseinheit (20) verbunden ist, um die vorgewärmte Luft in die mindestens eine zweite Öffnung (44) einzuleiten.

4. Anlage (100) nach Anspruch 3, wobei ein einziges aerothermisches Modul (1) vorgesehen ist, das oberhalb der einen oder den mehreren Trockenkammern (2') angeordnet ist, die entlang der Längsachse (X) miteinander ausgerichtet sind;
und wobei vorzugsweise die Heizmittel (21) außerhalb des Tunnels (42) an beiden Seitenflächen (60) des Tunnels angeordnet sind, um die absteigenden Seitenströme zu erwärmen, oder wobei die Heizmittel (50) innerhalb des Tunnels (42) unter jedem Förderband (10) angeordnet sind, wodurch die Heizmittel (50) in Zusammenarbeit mit dem mindestens einen Gebläse (22) geeignet sind, den aufsteigenden Luftstrom in dem zentralen Bereich (41) zu erzeugen.

5. Anlage (100) nach Anspruch 4, wobei das aerothermische Modul (1) Folgendes umfasst
- einen zentralen Kanal (45), der entlang der Längsachse (X) angeordnet ist und mit jeder ersten Öffnung (43) in Verbindung steht, um den ersten Teil der Luft zu der mindestens einen Wärmerückgewinnungseinheit (20) zu leiten;
- Seitenkanäle (46), die entlang der Längsachse angeordnet sind und mit der mindestens einen Wärmerückgewinnungseinheit (20) in Verbindung stehen, um die vorgewärmte Luft zu jeder zweiten Öffnung (44) zu leiten,
und wobei das mindestens eine Fördergebläse (23) so ausgelegt ist, dass es die vorgewärmte Luft in die Seitenkanäle (46) einleitet.

6. Anlage (100) nach Anspruch 5, **dadurch gekennzeichnet, dass** zwei Seitenkanäle (46), die symmetrisch zu dem zentralen Kanal (45) angeordnet sind, und mindestens ein Querkanal (47) für jede Trockenkammer (2') vorgesehen sind, der die Seitenkanäle (46) mit der mindestens einen zweiten Öffnung (44) verbindet.

7. Anlage (100) nach Anspruch 6, wobei für jede Trocknungskammer (2') zwei obere Kanäle (40), die an den Enden der Trocknungskammer (2') entlang der Längsachse (X) angeordnet sind, zwei zweite Öffnungen (44), wobei jede zweite Öffnung (44) an einem jeweiligen oberen Kanal (40) angeordnet ist, und zwei Querkanäle (47) vorgesehen sind, wobei jeder Querkanal (47) die Seitenkanäle (46) mit einer jeweiligen zweiten Öffnung (44) verbindet.

8. Anlage (100) nach Anspruch 6 oder 7, wobei die Seitenkanäle (46) zur Längsachse (X) konvergierende Achsen definieren, die an einer ersten Trocknungskammer (2'), in der vorzugsweise eine Öffnung für den Einlass des Produkts in das Trocknungsmodul (2) vorgesehen ist, weiter voneinander beabstandet sind, und an einer letzten Trocknungskammer (2'), in der vorzugsweise eine Öffnung für den Anlass des Produkts aus dem Produkttrocknungsmodul (2) vorgesehen ist, weniger weit voneinander beabstandet sind.

9. Anlage nach einem der Ansprüche 3 bis 8, wobei in den ersten Öffnungen (43) und in den zweiten Öffnungen (44) Mittel (48, 49) zur Regulierung des Luftstroms vorgesehen sind; wobei optional die mindestens eine Wärmerückgewinnungseinheit (20), vorzugsweise eine einzelne Wärmerückgewinnungseinheit, an einem Ende des aerothermischen Moduls angeordnet ist, vorzugsweise an der ersten Trocknungskammer (2'), in der eine Öffnung für den Einlass des Produkts in das Trocknungsmodul (2) vorgesehen ist.

10. Anlage (100) nach Anspruch 3, wobei eine Vielzahl von aerothermischen Modulen (1) vorgesehen ist, wobei jedes aerothermische Modul (1) über einer jeweiligen Trocknungskammer (2') angeordnet ist, wobei die Trocknungskammern entlang der Längsachse (X) zueinander ausgerichtet sind;
wobei die Heizmittel (21) vorzugsweise außerhalb des Tunnels (42) an beiden Seitenflächen (60) des Tunnels angeordnet sind, um die absteigenden Seitenströme zu erwärmen, oder wobei die Heizmittel (50) innerhalb des Tunnels (42) unter jedem Förderband (10) angeordnet sind, wodurch die Heizmittel (50) in Zusammenarbeit mit dem mindestens einen Gebläse (22) geeignet sind, den aufsteigenden Luftstrom in dem zentralen Bereich (41) zu erzeugen;
und vorzugsweise dadurch, dass jedes aerothermische Modul (1) Folgendes umfasst
- mindestens eine Wärmerückgewinnungseinheit (20), die mit der jeweiligen ersten Öffnung (43) so verbunden ist, dass sie von dem ersten Teil der Luft durchströmt wird, um durch Wärmeaustausch Luft auf Raumtemperatur, die in die Wärmerückgewinnungseinheit eintritt, vorzuwärmen, wodurch die vorgewärmte Luft erhalten wird;
- mindestens ein Fördergebläse (23), das mit der mindestens einen Wärmerückgewinnungseinheit (20) verbunden ist, um die vorgewärmte Luft in die jeweilige zweite Öffnung (44) einzuleiten.

11. Anlage (100) nach einem der vorhergehenden Ansprüche, wobei das Trocknungsmodul (2) mit Temperatur- und Feuchtigkeitssonden am Lufteinlass und am Luftauslass ausgestattet ist, wobei die Anlage (100) vorzugsweise ferner mit einem Waschmodul (3) versehen ist, das mit Waschwassertemperatursonden ausgestattet ist;
wobei vorzugsweise Motoren vorgesehen sind, die jedem einzelnen Förderband (10) zugeordnet sind, wobei die Motoren mit einer unabhängigen Steuerung und Einstellung der Geschwindigkeit der Förderbänder (10) versehen sind;
wobei vorzugsweise ein Rohrleitungssystem vorgesehen ist, das so beschaffen ist, dass es Waschwasser auf den Förderbändern (10) befördert, die automatisch für die Reinigung des Trocknungsmoduls (2) sorgen.

12. Anlage (100) nach einem der Ansprüche 2 bis 11, wobei das aerothermische Modul (1) eine Kondensatrückgewinnungsbatterie im Falle der Verwendung von Dampf als Heizmethode der Heizmittel (50, 21) umfasst, die vorzugsweise einstellbare Temperaturspulen umfasst, wobei jede Spule vorzugsweise innerhalb des Tunnels (42) unter jedem Förderband (10) in jeder Trocknungskammer (2') angeordnet ist, oder wobei die einstellbaren Temperaturspulen außerhalb des Tunnels (42) in jeder Trocknungskammer (2') an beiden Seitenflächen (60) des Tunnels (42) angeordnet sind.

13. Verfahren zum Trocknen von Lebensmitteln (6), das mittels einer Anlage (100) nach einem der vorhergehenden Ansprüche durchgeführt werden kann, wobei das Verfahren bei regulärem Betrieb der Anlage den Vorschub der Lebensmittel (6) auf einer Reihe von Förderbändern (10) umfasst, die sich kontinuierlich innerhalb der einen oder mehreren Trocknungskammern (2') in einer alternierenden Bewegungsrichtung und mit einer voneinander verschiedenen Geschwindigkeit bewegen;
wobei die Einführung von vorgewärmter Luft in die eine oder die mehreren Trocknungskammern (2') mittels des mindestens einen aerothermischen Moduls (1) bei einer ersten Temperatur vorgesehen ist, wobei die erste Temperatur niedriger ist als die Temperaturen der in der einen oder den mehreren Trocknungskammern (2') vorhandenen Luft;
wobei die vorgewärmte Luft von oben in zwei einander entgegengesetzte Richtungen eingeleitet wird, vorzugsweise mittels mindestens eines oberen Kanals (40), der in jeder Trocknungskammer vorgesehen ist, und im Wesentlichen tangential zur inneren Seitenfläche der Trocknungskammer (2'), wodurch absteigende Seitenluftströme erzeugt werden, die der inneren Seitenfläche folgen und die, sobald der Boden der Trocknungskammer erreicht ist, in einen aufsteigenden Luftstrom zusammenlaufen, der durch einen zentralen Bereich (41) der Trocknungskammer verläuft, der von den Förderbändern (10) durchquert wird.

14. Verfahren nach Anspruch 13, wobei der aufsteigende Luftstrom in dem durch einen Tunnel (42) begrenzten zentralen Bereich (41), durch Ansaugen von Luft aus dem Tunnel (42) von unten nach oben mittels mindestens eines Gebläses (22) erzeugt wird, das zwischen dem Tunnel (42) und dem mindestens einen oberen Kanal (40) angeordnet ist, und vorzugsweise auch durch Erwärmen der Luft mittels Heizmittel (50) erzeugt wird, die jedem Förderband (10) zugeordnet sind.

15. Verfahren nach Anspruch 13 oder 14, wobei ein erster Teil der Luft des aufsteigenden Luftstroms aus mindestens einer ersten oberen Öffnung (43) der Trocknungskammer (2') entweicht, während ein zweiter Teil der Luft des aufsteigenden Luftstroms seitlich abgeleitet wird und die absteigenden Seitenströme speist;
wobei der erste Teil der aus der ersten oberen Öffnung (43) entweichenden Luft vorzugsweise durch mindestens eine Wärmerückgewinnungseinheit (20) strömt, um die in die Wärmerückgewinnungseinheit eintretende Luft auf Raumtemperatur vorzuwärmen, wodurch die vorgewärmte Luft erhalten wird, die in die Trocknungskammer eingeleitet wird.

## Revendications

1. Installation (100) pour le séchage de produits alimentaires (6), en particulier de fruits et légumes, ladite installation (100) définissant un axe longitudinal (X) et comprenant :
- un module de séchage en continu (2) comprenant une ou plusieurs étuves de séchage (2') ayant une forme sensiblement cylindrique et une série de bandes transporteuses (10) aptes à se déplacer en continu à l'intérieur de ladite une ou plusieurs étuves de séchage et disposées sur des plans sensiblement parallèles et superposés, lesdites bandes transporteuses (10) étant aptes à se déplacer dans une direction de mouvement alternatif et à une vitesse différente l'une de l'autre,
- au moins un module aérothermique (1) pour le traitement de l'air en continu, apte à introduire de l'air préchauffé, au moyen d'au moins une unité de récupération de chaleur (20), dans ledit module de séchage en continu (2),
dans laquelle ledit module de séchage en continu (2) comprend des moyens de génération de flux d'air pour générer par le haut des flux d'air latéraux descendants, dans deux directions opposées l'une à l'autre, qui suivent la surface latérale interne de chaque étuve de séchage (2') et qui, une fois qu'un fond de l'étuve de séchage est atteint, convergent en un flux d'air ascendant qui passe à travers une zone centrale (41) de l'étuve de séchage traversée par lesdites bandes transporteuses (10).

2. Installation (100) selon la revendication 1, dans laquelle lesdits moyens de génération de flux d'air comprennent dans chaque étuve de séchage (2') :
- au moins un conduit supérieur (40), communiquant avec ledit au moins un module aérothermique (1) et d'une forme qu'il génère deux flux d'air latéraux descendants qui suivent la surface latérale interne de l'étuve de séchage (2'),
- des moyens de chauffage (50, 21) pour chauffer l'air à l'intérieur de l'étuve de séchage (2') ;
- un tunnel (42) définissant ladite zone centrale (41), placé sous ledit au moins un conduit supérieur (40), et ouvert en bas vers le fond de l'étuve de séchage où convergent lesdits flux latéraux descendants ;
- au moins un ventilateur (22), disposé entre ledit tunnel (42) et ledit au moins un conduit supérieur (40), apte à aspirer de l'air du tunnel (42) ;
dans laquelle ledit au moins un ventilateur (22) est apte à générer ledit flux d'air ascendant dans ladite zone centrale (41).

3. Installation selon la revendication 2, dans laquelle chaque étuve de séchage (2') est pourvue au-dessus de
- au moins une première ouverture (43) pour une évacuation d'une première partie de l'air dudit flux d'air ascendant poussé par ledit au moins un ventilateur (22) ;
- et au moins une deuxième ouverture (44) pour l'introduction de l'air préchauffé dans ledit au moins un conduit supérieur (40) ;
et dans laquelle ledit au moins un module aérothermique (1) comprend
- ladite au moins une unité de récupération de chaleur (20) apte à être traversée par ladite première partie de l'air, pour préchauffer, au moyen d'un échange de chaleur, l'air à température ambiante entrant dans ladite unité de récupération de chaleur, obtenant ledit air préchauffé ;
- et au moins un ventilateur de refoulement (23) relié à ladite au moins une unité de récupération de chaleur (20) pour introduire ledit air préchauffé dans l'au moins une deuxième ouverture (44).

4. Installation (100) selon la revendication 3, dans laquelle est fourni un seul module aérothermique (1), placé au-dessus de l'une ou plusieurs étuves de séchage (2') alignées les unes avec les autres le long dudit axe longitudinal (X) ;
et de préférence dans laquelle les moyens de chauffage (21) sont disposés à l'extérieur du tunnel (42), au niveau des deux surfaces latérales (60) dudit tunnel, pour chauffer lesdits flux latéraux descendants, ou dans laquelle les moyens de chauffage (50) sont disposés à l'intérieur du tunnel (42) au-dessous de chaque bande transporteuse (10) par quoi lesdits moyens de chauffage (50), en coopération avec ledit au moins un ventilateur (22), sont aptes à générer ledit flux d'air ascendant dans ladite zone centrale (41).

5. Installation (100) selon la revendication 4, dans laquelle ledit module aérothermique (1) comprend
- un conduit central (45), disposé le long de l'axe longitudinal (X) et communiquant avec chaque première ouverture (43) de manière à transporter ladite première partie de l'air vers l'au moins une unité de récupération de chaleur (20) ;
- des conduits latéraux (46), disposés le long dudit axe longitudinal, communiquant avec ladite au moins une unité de récupération de chaleur (20), aptes à transporter ledit air préchauffé vers chaque deuxième ouverture (44),
et dans laquelle ledit au moins un ventilateur de refoulement (23) est apte à introduire ledit air préchauffé dans lesdits conduits latéraux (46).

6. Installation (100) selon la revendication 5, dans laquelle sont fournis deux conduits latéraux (46), disposés symétriquement par rapport audit conduit central (45), et au moins un conduit transversal (47) pour chaque étuve de séchage (2') reliant lesdits conduits latéraux (46) à l'au moins une deuxième ouverture (44).

7. Installation (100) selon la revendication 6, dans laquelle, pour chaque étuve de séchage (2'), sont fournis deux conduits supérieurs (40), disposés aux extrémités de ladite étuve de séchage (2') le long de l'axe longitudinal (X) ; deux deuxièmes ouvertures (44), chaque deuxième ouverture (44) placée au niveau d'un conduit supérieur (40) respectif ; et deux conduits transversaux (47), chaque conduit transversal (47) reliant lesdits conduits latéraux (46) à une deuxième ouverture (44) respective.

8. Installation (100) selon la revendication 6 ou 7, dans laquelle lesdits conduits latéraux (46) définissent des axes convergeant vers ledit axe longitudinal (X), plus espacés les uns des autres au niveau d'une première étuve de séchage (2') dans laquelle est fournie de préférence une ouverture pour l'entrée du produit dans le module de séchage (2), et moins espacés les uns des autres au niveau d'une dernière étuve de séchage (2'), dans laquelle est fournie de préférence une ouverture pour la sortie du produit dudit module de séchage de produit (2).

9. Installation selon l'une quelconque des revendications 3 à 8, dans laquelle dans lesdites premières ouvertures (43) et dans lesdites deuxièmes ouvertures (44) sont fournis des moyens de régulation de flux d'air (48, 49) ; facultativement dans laquelle ladite au moins une unité de récupération de chaleur (20), de préférence une seule unité de récupération de chaleur, est disposée à une extrémité dudit module aérothermique, de préférence au niveau de la première étuve de séchage (2') dans laquelle est fournie une ouverture pour l'entrée du produit dans le module de séchage (2).

10. Installation (100) selon la revendication 3, dans laquelle est fournie une pluralité de modules aérothermiques (1), chaque module aérothermique (1) étant placé au-dessus d'une étuve de séchage (2') respective, les étuves de séchage étant alignées les unes avec les autres le long dudit axe longitudinal (X) ;
de préférence dans laquelle les moyens de chauffage (21) sont disposés à l'extérieur du tunnel (42), au niveau des deux surfaces latérales (60) dudit tunnel, pour chauffer lesdits flux latéraux descendants, ou dans laquelle les moyens de chauffage (50) sont disposés à l'intérieur du tunnel (42) au-dessous de chaque bande transporteuse (10) par quoi lesdits moyens de chauffage (50), en coopération avec ledit au moins un ventilateur (22), sont aptes à générer ledit flux d'air ascendant dans ladite zone centrale (41) ;
et de préférence dans laquelle chaque module aérothermique (1) comprend
- au moins une unité de récupération de chaleur (20) communiquant avec la première ouverture (43) respective de manière à être traversée par ladite première partie de l'air, pour préchauffer, au moyen d'un échange de chaleur, l'air à température ambiante entrant dans ladite unité de récupération de chaleur, en obtenant ledit air préchauffé ;
- au moins un ventilateur de refoulement (23) relié à ladite au moins une unité de récupération de chaleur (20) pour introduire ledit air préchauffé dans la deuxième ouverture (44) respective.

11. Installation (100) selon l'une quelconque des revendications précédentes, dans laquelle le module de séchage (2) est équipé de sondes de température et d'humidité au niveau de l'entrée d'air et de la sortie d'air, l'installation (100) étant, de préférence, également pourvue d'un module de lavage (3) équipé de sondes de température d'eau de lavage ;
de préférence dans laquelle sont fournis des moteurs associés à chaque bande transporteuse individuelle (10), lesdits moteurs étant pourvus d'une commande et d'un réglage indépendants de la vitesse des bandes transporteuses (10) ;
de préférence dans laquelle est fourni un système de tuyauterie, apte à transporter l'eau de lavage sur les bandes transporteuses (10) fournissant automatiquement le nettoyage du module de séchage (2).

12. Installation (100) selon l'une quelconque des revendications 2 à 11, dans laquelle le module aérothermique (1) comprend une batterie de récupération de condensat dans le cas de l'utilisation de vapeur comme méthode de chauffage desdits moyens de chauffage (50, 21), comprenant de préférence des bobines à température réglable, de préférence dans laquelle chaque bobine est disposée à l'intérieur du tunnel (42) au-dessous de chaque bande transporteuse (10) dans chaque étuve de séchage (2'), ou dans laquelle lesdites bobines à température réglable sont disposées à l'extérieur dudit tunnel (42) dans chaque étuve de séchage (2'), au niveau des deux surfaces latérales (60) du tunnel (42).

13. Procédé de séchage de produits alimentaires (6), qui peut être mis en œuvre au moyen d'une installation (100) selon l'une quelconque des revendications précédentes, le procédé comprenant, lors du fonctionnement en régime de l'installation, l'avancement des produits alimentaires (6) sur la série de bandes transporteuses (10) qui se déplacent en continu à l'intérieur de ladite une ou plusieurs étuves de séchage (2') dans une direction de mouvement alternatif et à une vitesse différente l'une de l'autre ;
dans lequel est fournie l'introduction d'air préchauffé dans lesdites une ou plusieurs étuves de séchage (2') au moyen de l'au moins un module aérothermique (1) à une première température, ladite première température étant inférieure aux températures de l'air présent dans lesdites une ou plusieurs étuves de séchage (2') ;
dans lequel ledit air préchauffé est introduit par le haut dans deux directions opposées l'une à l'autre, de préférence au moyen d'au moins un conduit supérieur (40) fourni dans chaque étuve de séchage, et sensiblement tangentiellement à la surface latérale interne de l'étuve de séchage (2'), générant des flux d'air latéraux descendants qui suivent ladite surface latérale interne et qui, une fois que le fond de l'étuve de séchage est atteint, convergent en un flux d'air ascendant qui passe à travers une zone centrale (41) de l'étuve de séchage traversée par lesdites bandes transporteuses (10).

14. Procédé selon la revendication 13, dans lequel ledit flux d'air ascendant dans la zone centrale (41), délimitée par un tunnel (42), est généré en aspirant l'air du tunnel (42) du bas vers le haut au moyen d'au moins un ventilateur (22), disposé entre ledit tunnel (42) et ledit au moins un conduit supérieur (40), et est de préférence également généré en chauffant ledit air au moyen de moyens de chauffage (50) associés à chaque bande transporteuse (10).

15. Procédé selon la revendication 13 ou 14, dans lequel une première partie de l'air dudit flux d'air ascendant s'échappe d'au moins une première ouverture supérieure (43) de l'étuve de séchage (2'), tandis qu'une deuxième partie de l'air dudit flux d'air ascendant est déviée latéralement, alimentant les flux latéraux descendants ;
de préférence dans lequel ladite première partie de l'air s'échappant de la première ouverture supérieure (43) passe à travers au moins une unité de récupération de chaleur (20) pour préchauffer l'air à température ambiante entrant dans ladite unité de récupération de chaleur, obtenant ledit air préchauffé, qui est introduit dans l'étuve de séchage.
